# EUROPEAN PATENT APPLICATION

(11) **EP 1 484 376 A2**
(43) Date of publication of application: **08.12.2004**
(21) Application number: 03013065.2
(22) Date of filing: 02.10.2001
(51) Int. Cl.: C09J 5/00, C08J 5/12, C09J 177/02

(54) **Solvent adhesive**

(30) Priority: 05.10.2000 JP 2000306463
(62) Divisional of application: 01123683.3
(71) Applicant: Ube Industries, Ltd., Ube-Shi, Yamaguchi 755-8633 (JP)
(72) Inventor: Higuchi, Yuji, c/o Osaka Gas Co., Ltd., Osaka 541-0046 (JP); Isobe, Noriyuki, Ube Industries, Ltd., Ube-shi, Yamaguchi 755-8633 (JP); Fujimura, Hideki, Ube Industries, Ltd., Ube-shi, Yamaguchi 755-8633 (JP); Matsuda, Shinya, Ube Industries, Ltd., Ube-shi, Yamaguchi 755-8633 (JP)
(74) Representative: Grünecker, Kinkeldey, Stockmair & Schwanhäusser Anwaltssozietät

(57) **Abstract**

Solvent Adhesive suitable for joining a joint to be adhered to nylon resin moldings is disclosed, which comprises a copolymerized nylon.

## Description

### FIELD OF THE INVENTION

The present invention relates to a joint which can provide sufficient adhesion strength when adhered to nylon resin moldings using a solvent adhesive.

### BACKGROUND OF THE INVENTION

Solvent adhesives are used for adhering nylon resin moldings to each other. Solvents for used in these solvent adhesives are required to dissolve nylon to be adhered. As solvents for the solvent adhesives adapted for nylons, phenolic compounds such as phenol, cresol and chlorophenol or fluoroalcohols are currently used, but all of these are so poisonous or stimulous that they are not preferred from the point of working environment.

Thus, in order to reduce toxicity of the phenolic compounds, those compounds have been used which have a phenolic hydroxyl group and one or more alkyl groups. Of these, a combination of carvacrol (2-methyl-5-isopropylphenol) and thymol (5-methyl-2-isopropylphenol) has a comparatively low toxicity and can remain liquid down to a temperature as low as -20°C depending upon composition ratio, thus being usable over a wide range of temperature. A solvent adhesive obtained by dissolving nylon in this mixed solvent of carvacrol and thymol is described in Japanese Patent No. 2909203, and is used for adhering a nylon gas pipe to a nylon joint.

However, in cases where an enough peel strength is required at adhesion portions between the pipe and the joint or in other uses, the current adhesion strength is not enough, and use of the adhesives has been limited.

### SUMMARY OF THE INVENTION

An object of the present invention is to provide a joint for nylon resin moldings, which can provide an enough peel strength when adhered to nylon resin moldings using a solvent adhesive.

Mechanism of adhesion with a solvent adhesive is that, first, materials to be adhered are dissolved in the solvent adhesive at the adhesion portion, and the dissolved polymer molecule chains then mutually invade into the materials to be adhered, and the solvent evaporates or is absorbed by the materials to be adhered to form a dry, solidified adhesion layer at the adhesion interface. Therefore, solvents for the solvent adhesive are required to sufficiently dissolve materials to be adhered.

The present invention is based on the finding that, by the use of a copolymerized nylon or a composition comprising a copolymerized nylon or a copolymerized nylon blend and at least one of a nucleating agent and a lubricant as a material for a joint to be adhered to nylon resin moldings, solubility of nylon resin in the solvent contained in the solvent adhesive is enhanced to thereby form the adhesion layer more effectively at the adhesion interface, thus adhesion strength being improved and moldability being improved through shortening cooling time upon injection molding.

That is, the invention relates to a joint to be adhered to nylon resin moldings using a solvent adhesive, in which a material for the joint comprises a copolymerized nylon.

In addition, the invention relates to a joint to be adhered to nylon resin moldings using a solvent adhesive, in which a material for the joint comprises a composition comprising a copolymerized nylon or a copolymerized nylon blend and at least one of a nucleating agent and a lubricant.

Further, the invention relates to a method for adhering nylon resin moldings, which comprises adhering the nylon resin moldings to a joint using a solvent adhesive.

Still further, the invention relates to a solvent adhesive for nylon resin moldings, which comprises a solvent and a copolymerized nylon.

Yet further, the invention relates to an adhesion structure wherin a material comprising a copolymerized nylon or a composition comprising a copolymerized nylon or a copolymerized nylon blend and at least one of a nucleating agent and a lubricant is adhered to a material comprising other nylon resin using a solvent adhesive.

### BRIEF DESCRIPTION OF THE DRAWINGS

Fig. 1 is a sectional view showing a joint for nylon pipes manufactured by insert molding.
Fig. 2 is a sectional view showing a joint for nylon pipes manufactured by sandwitch molding.

### DETAILED DESCRIPTION OF THE INVENTION

The invention is described in detail below.

The copolymerized nylon to be used as a material for the joint of the invention is a copolymerized nylon comprising two kinds or more units derived from aminocarboxylic acids, lactams or a combination of diamine and dicarboxylic acid. Specifically, there are illustrated those which comprise two or more units derived from lactams containing 6 to 12 carbon atoms, aminocarboxylic acids containing 6 to 12 carbon atoms or a combination of a dicarboxylic acid containing 3 to 22 carbon atoms and a diamine containing 2 to 20 carbon atoms.

As the aminocarboxylic acid containing 6 to 12 carbon atoms, there may be used 6-aminocaproic acid, 7-aminoheptanoic acid, 8-aminooctanoic acid, 9-aminononanoic acid, 10-aminocapric acid, 11-aminoundecanoic acid, 12-aminododecanoic acid, etc.

As the lactam containing 6 to 12 carbon atoms, there may be used ε-caprolactam, ω-enantolactam, ω-undecanelactam, ω-dodecalactam, etc.

As the diamine and dicarboxylic acid, linear diamines and linear dicarboxylic acids are used but, for the purpose of decreasing crystalinity, there may be used copolymerized nylons wherein part of starting materials of nylons derived from the linear diamine and the linear dicarboxylic acid may be replaced by a branched diamine and/or a branched dicarboxylic acid.

As the linear aliphatic dicarboxylic acid, there may be used malonic acid, succinic acid, glutaric acid, adipic acid, pimelic acid, suberic acid, azelaic acid, sebacic acid, undecane dicarboxylic acid, dodecane dicarboxylic acid, tridecane dicarboxylic acid, tetradecane dicarboxylic acid, pentadecane dicarboxylic acid, hexadecane dicarboxylic acid, heptadecane dicarboxylic acid, octadecane dicarboxylic acid, nonadecane dicarboxylic acid, eicosane dicarboxylic acid, etc.

As the linear aliphatic diamine, there may be used ethylenediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecane-diamine, 1,13-tridecanediamine, 1,14-tetradecanediamine, 1,15-pentadecanediamine, 1,16-hexadecanediamine, 1,17-heptadecanediamine, 1,18-octadecanediamine, 1,19-nonadecanediamine, 1,20-eicosanediamine, etc.

As the branched aliphatic diamine, there may be used 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butane-diamine, 2,3-dimethyl-1,4-butanediamine, 2-methyl-1,5-pentanediamine, 3-methyl-1,5-pentanediamine, 2,2-dimethyl-1,6-hexanediamine, 2,5-dimethyl-1,6-hexanediamine, 2,4-dimethyl-1,6-hexanediamine, 3,3-dimethyl-1,6-hexane-diamine, 2,2,4-trimethyl-1,6-hexanediamine, 2,4,4-trimethyl-1,6-hexanediamine, 2,4-diethyl-1,6-hexane-diamine, 2,2-dimethyl-1,7-heptanediamine, 2,3-dimethyl-1,7-heptanediamine, 2,4-dimethyl-1,7-heptanediamine, 2,5-dimethyl-1,7-peptanediamine, 2-methyl-1,8-octanediamine, 3-methyl-1,8-octanediamine, 4-methyl-1,8-octanediamine, 1,3-dimethyl-1,8-octanediamine, 1,4-dimethyl-1,8-octane-diamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octane-diamine, 4,4-dimethyl-1,8-octanediamine, 5-methyl-1,9-nonanediamine, etc.

As the branched dicarboxylic acid, there may be used dimethylmalonic acid, 3,3-diethylsuccinic acid, 2,2-dimethylglutaric acid, 2-methyladipic acid, 3-methyladipic acid, trimethyladipic acid, 2-butylsuberic acid (also named 1,6-decane dicarboxylic acid), 2,3-dibutylbutane dioic acid, 8-ethyloctadecane dioic acid, 8,13-dimethyleicosadioic acid, 2-octylundecane dioic acid, 2-nonyldecane dioic acid, etc.

As the copolymerized nylon to be used in the invention as a material for the joint, there may be used a binary copolymerized nylon comprising two components derived from the above-described starting materials or a copolymerized nylon comprising three or more components derived from the above-described starting materials.

The nylon to be used as a material for the joint, the copolymerized nylon may independently be used, or may be used as a blend of the copolymerized nylon and a homonylon or a blend of the copolymerized nylon and other copolymerized nylon. As the copolymerized nylon blend, there are illustrated, for example, a blend of the copolymerized nylon and a nylon selected from the group consisting of nylon 6, nylon 11, nylon 12, nylon 6,6, nylon 6,10 and nylon 6,12. The term "nylon 6,6" as used herein means a homonylon obtained by polymerizing a diamine containing 6 carbon atoms with a dicarboxylic acid containing 6 carbon atoms.

As specific examples of the nylon resins to be adhered to the joint of the invention, there are illustrated aliphatic polyamides such as nylon 6, nylon 6,6, nylon 11 and nylon 12 and semi-aromatic polyamide resins such as polyhexamethylene terephthalamide and polyhexamethylene isophthalamide. These resins may comprise a single copolymer or a mixture of two or more copolymers.

As the nucleating agent to be used in the material for the joint of the invention, there may be used inorganic nucleating agents such as talc, wollastnite, calcium carbonate, kaolin, calcined kaolin, silica, zeolite, boron nitride, alumina, magnesia, graphite and mica, and organic nucleating agents such as oxalates, stearates, benzoates, salicylates, tartrates, sulfonates, montan wax salts, montan wax esters, terephthalates, benzoates and carboxylates. Of these, talc is preferably used. The nucleating agent is preferably compounded in an amount ranging from 0.1 to 5 parts by weight per 100 parts by weight of the resin component.

As the lubricant to be used in the material for the joint of the invention, there are illustrated those which are commonly used in nylons, such as fatty acids, metallic soaps derived from fatty acids, aliphatic alcohols, hydroxyfatty acids, fatty acid amides, etc. The lubricant is preferably contained in an amount ranging from 0.05 to 5 parts by weight per 100 parts by weight of the resin component.

As the fatty acid, there may be used capric acid, n-undecylenic acid, lauric acid, n-tridecylenic acid, myristic acid, n-pentadecylenic acid, palmitic acid, margaric acid, stearic acid, n-nonadecylenic acid, arachidonic acid, n-heneiconic acid, behenic acid, n-tricosanoic acid, lignoceric acid, n-pentacosanoic acid, cerotic acid, n-heptacosanoic acid, montanic acid, n-nonacosanoic acid, melissic acid, n-hentriacontanoic acid, n-dotriacontanoic acid, n-tetratriacontanoic acid, ceroplastic acid, n-hexatriacontanoic acid, n-octatriacontanoic acid, n-hexatetracontanoic acid, oleic acid, erucic acid, hydroxystearic acid, ricinoleic acid, etc.

As the aliphatic alcohol, there may be used octanol, nonanol, decanol, undecanol, dodecanol, tridecanol, myristyl alcohol, pentadecanol, cetyl aocohol, heptadecanol, stearyl alcohol, nonadecanol, aralkyl alcohol, behenyl alcohol, carnaubyl alcohol, ceryl alcohol, octacosanol, melissyl alcohol, dotriacontanol, pentaerythritol, etc.

As the metallic soap, there may be used calcium salts, zinc salts and lithium salts derived from capric acid, n-undecylenic acid, lauric acid, n-tridecylenic acid, myristic acid, n-pentadecylenic acid, palmitic acid, stearic acid, behenic acis, montanic acid, oleic acid, erucic acid, hydroxystearic acid and ricinoleic acid.

As the fatty acid amide, there may be used caproic acid amide, caprylic acid amide, capric acid amide, lauric acid amide, myristic acid amide, palmitic acid amide, stearic acid amide, arachidic acid amide, behenic acid amide, palmitoleic acid amide, oleic acid amide, eicosenoic acid amide, erucic acid amide, elaidic acid amide, trans-11-eicosenoic acid amide, trans-13-docosenoic acid amide, linoleic acid amide, linolenic acid amide, ricinoleic acid amide, N,N'-methylenebiscaproic acid amide, N,N'-methylenebiscaprylic acid amide, N,N'-methylenebiscapric acid amide, N,N'-methylenebislauric acid amide, N,N'-methylenebismyristic acid amide, N,N'-methylenebispalmitic acid amide, N,N'-methylenebisstearic acid amide, N,N'-methylenebisbehenic acid amide, N,N'-methylenebisoleic acid amide, N,N'-methylenebiseicosenoic acid amide, N,N'-methylenebiserucic acid amide, N,N'-methylenebiselaidic acid amide, N,N'-methylenebiserucic acid amide, N,N'-ethylenebiscaproic acid amide, N,N'-ethylenebiscaprylic acid amide, N,N'-ethylenebiscapric acid amide, N,N'-ethylenebislauric acid amide, N,N'-ethylenebismyristic acid amide, N,N'-ethylenebispalmitic acid amide, N,N'-ethylenebisstearic acid amide, N,N'-ethylenebisbehenic acid amide, N,N'-ethylenebisoleic acid amide, N,N'-ethylenebiseicosenoic acid amide, N,N'-ethylenebiserucic acid amide, N,N'-ethylenebiselaidic acid amide, N,N'-ethylenebiserucic acid amide, etc.

The joint of the invention may be totally constituted by the aforesaid material for the joint, or may partly be constituted by the aforesaid material at the portion to be in contact with materials to be adhered.

As molding methods using the joint material at least at the adhesion portion, a dissimilar material molding using different materials such as insert molding or sandwitch molding may be used.

For example, there may be employed a dissimilar material molding using different materials, such as an insert molding wherein a primary member resin is first molded, and the resulting molding is inserted into a metal mold for a secondary member resin, followed by casting a secondary member resin into necessary portion of the mold to heat-fuse with the primary member resin or a sandwitch molding method wherein a primary member resin is injected into a metal mold, then a secondary member resin is injected so that the primary material resin forms a surface layer (skin layer) and the secondary member resin forms an inner layer (core layer).

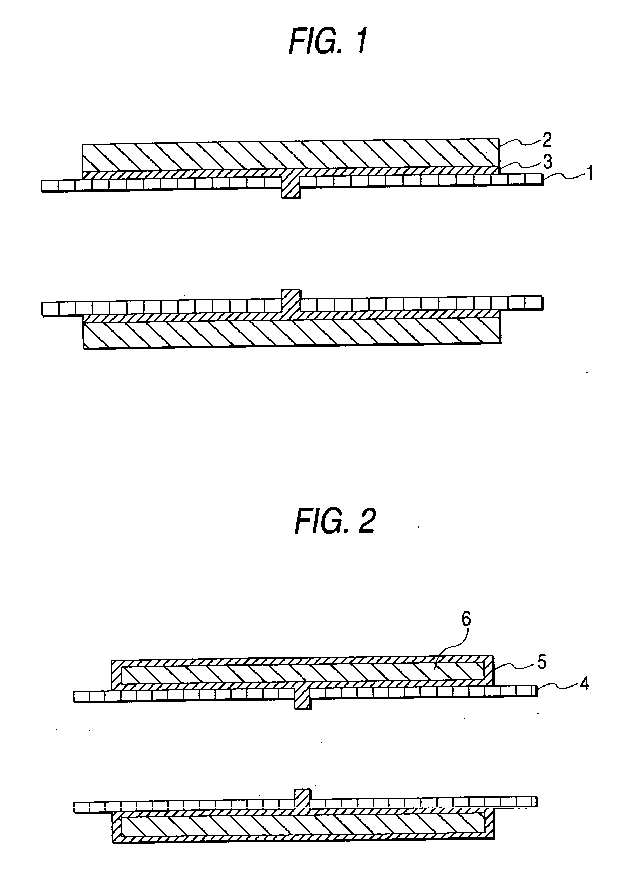

Fig. 1 is a sectional view of a socket for pipe manufactured by the insert molding method. A joint for joining nylon pipes 1 comprises an outer layer 2 and an inner layer 3. Peel strength at the surface adhered to the nylon pipe can effectively be improved by using the aforesaid joint material as the inner layer 3.

Fig. 2 is a sectional view showing a socket for pipe manufactured by the sandwitch molding method. A joint for joining nylon pipes 4 comprises an outer layer (skin layer) 5 and an inner layer (core layer) 6. Peel strength at the surface adhered to the nylon pipe 4 can effectively be improved by using the aforesaid joint material as the outer layer (skin layer).

To the copolymerized nylons to be used as a material for the joint of the invention may optionally be added additives such as a heat resistance-imparting agent, a weather resistance-imparting agent, an antioxidant, a UV absorbent, a fire retardant, an impact resistance-imparting agent, an antistatic agent, a plasticizer, etc.

In addition, to the copolymerized nylons to be used as a material for the joint of the invention may be added, if necessary, reinforcing materials such as glass fibers, inorganic fibers, organic fibers, carbon black, etc.

To the copolymerized nylons to be used as a material for the joint of the invention may optionally be added colorants such as pigments or dyes.

A solvent adhesive is used for adhering the joint of the invention to nylon resin moldings. As the solvent adhesive, those adhesives may be used which comprise a solvent capable of dissolving nylon resin moldings and the joint, such as a phenolic compound (e.g., phenol, alkylphenol, etc.) or a fluoroalcoholic compound.

As the phenolic compounds, there are illustrated phenol, o-cresol, m-cresol, p-cresol, o-ethylphenol, methylphenol, p-ethylphenol, o-propylphenol, m-propyl-phenol, o-isopropylphenol, m-isopropylphenol, p-isopropylphenol, o-n-butylphenol, m-n-butylphenol, p-n-butylphenol, o-sec-butylphenol, m-sec-butylphenol, p-sec-butylphenol, o-tert-butylphenol, m-tert-butylphenol, p-tert-butylphenol, 4-amylphenol, 4-octylphenol, 4-tert-octylphenol, 4-nonylphenol, 4-dodecylphenol, 2,3-dimethylphenol, 2,4-dimethylphenol, 2,5-dimethylphenol, 2,6-dimethylphenol, 3,4-dimethylphenol, 3,5-dimethylphenol, 4-isopropyl-3-methylphenol, 5-isopropyl-2-methylphenol (also called carvacrol), 6-isopropyl-3-methylphenol (also called thymol), 2-tert-butyl-4-methylphenol, 6-tert-butyl-3-methylphenol, 6-tert-butyl-2-methylphenol, 6-tert-butyl-2,4-dimethylphenol, 4,6-tert-butyl-3-methylphenol, resorcinol, 2-methylresorcinol, 4-methylresorcinol, 5-methylresorcinol, 2-ethylresorcinol, 4-ethylresorcinol, 5-ethylresorcinol, 2-butylresorcinol, 4-butylresorcinol, 5-butylresorcinol, 2-amylresorcinol, 4-amylresorcinol, 5-amylresorcinol, 2-hexylresorcinol, 4-hexylresorcinol, 5-hexylresorcinol, 2-heptylresorcinol, 4-heptylresorcinol, 5-heptylresorcinol, 2-octylresorcinol, 4-octylresorcinol, 5-octylresorcinol, 2-nonylresorcinol, 4-nonylresorcinol, 5-nonylresorcinol, 2-dodecylresorcinol, 4-dodecylresorcinol, 5-dodecylresorcinol, catechol, 3-methylcatechol, 4-methylcatechol, hydroquinone, 1,2,3-trihydroxybenzene (also called pyrogallol) and 1,3,5-trihydroxybenzene (also called phloroglucinol).

As the fluoroalcoholic compounds, there are illustrated 1,1,1,3,3,3-hexafluoroisopropanol, and 1,1,1-trifluoroethanol.

Of these, a combination of carvacrol (2-methyl-5-isopropylphenol) and thymol (5-methyl-2-isopropylphenol) is preferred, because it shows a comparatively low toxicity and can remain liquid to below -20°C depending upon the composition ratio, thus permitting to use over a wide range of temperature.

In the invention, a solvent adhesive containing a copolymerized nylon is preferred as the solvent adhesive. Incorporation of the copolymerized nylon enables formation of an adhesive layer at the adhesion interface with more effectivity, thus adhesion strength being improved.

As the copolymerized nylon, there may be used those copolymerized nylons which comprise two kinds or more units derived from a lactam containing 6 to 12 carbon atoms, an aminocarboxylic acid containing 6 to 12 carbon atoms, or a combination of a dicarboxylic acid containing 3 to 22 carbon atoms and a diamine containing 2 to 20 carbon atoms.

Concentration of the copolymerized nylon contained in the adhesive is preferably 0.5 to 20% by weight based on the total weight of the adhesive. In case where concentration of the copolymerized nylon is less than 0.5% by weight, viscosity of the resulting adhesive becomes too low that it tends to run upon application, thus being difficult to handle. On the other hand, in case where concentration of the copolymerized nylon becomes more than 20% by weight, viscosity becomes so high that it becomes difficult to handle and that it takes long before solidification.

In addition, in the invention, the adhesion structure of nylon resin wherein the aforesaid joint material and the material comprising other nylon resin are adhered to each other using the solvent adhesive can be applied to various nylon resin products. For example, it can be applied to joining of hollow moldings or adhesion for producing multi-layer film.

The invention is now described in more detail by reference to Examples and Comparative Examples which, however, are not to be construed as limiting the invention in any way.

Evaluation was conducted using nylon 12 as a specific example of a material to be adhered using the joint of the invention.

### EXAMPLES 1 TO 3 AND COMPARATIVE EXAMPLES 1 TO 3

Tensile test specimens (Type I) were prepared according to ASTM D638 using nylon 12, which were referred to as materials A to be adhered. Then, 12.7 mm X 120 mm X 0.6 mmt test specimens were prepared by compression molding using resins shown in Table 1, which were referred to as materials B to be adhered. Subsequently, each of the materials A to be adhered was adhered to each of the materials B to be adhered using a solvent adhesive for nylon NYLINK (10% by weight solution of nylon 11 in carvacrol/thymol = 2/1) made by Industrial Pipe System. Adhered length was adjusted to be 50 mm and, after leaving for 6 days, peeling test was conducted. The distance between grips was 40 mm, and rate of pulling was 200 mm/min. Results of the evaluation are shown in Table 1.

**Table 1**

| | Material A to be adhered | Material B to be adhered | Peel Strength (N) |
|---|---|---|---|
| Example 1 | nylon 12 | nylon 6/nylon 12 =80/20 12 | 86.5 |
| Example 2 | nylon 12 | nylon 6/nylon 12 =40/60 | 105.1 |
| Example 3 | nylon 12 | nylon 6/nylon 12 =25/75 | 106.1 |
| Comparative Ex. 1 | nylon 12 | nylon 12 | 9.0 |
| Comparative Ex. 2 | nylon 12 | nylon 11 | 31.2 |
| Comparative Ex. 3 | nylon 12 | nylon 6 | 34.8 |

### EXAMPLES 4 AND 5 AND COMPARATIVE EXAMPLE 4

Tensile test specimens (Type I) were prepared by injection molding according to ASTM D638 using resins shown in Table 2, which were referred to as materials A to be adhered. Then, 12.7 mm X 120 mm X 1.5 mmt test specimens were prepared by injection molding using nylon 12, which were referred to as materials B to be adhered. Subsequently, each of the materials A to be adhered was adhered to each of the materials B to be adhered using a solvent adhesive prepared by dissolving each resin shown in Table 2 in a solvent (carvacrol/thymol = 2/1) at a concentration of 1% by weight. Adhered length was adjusted to be 50 mm and, after leaving for 6 days, peeling test was conducted. The distance between grips was 40 mm, and rate of pulling was 200 mm/min. Results of the evaluation are shown in Table 2.

**Table 2**

| | Material A to be adhered | Material B to be adhered | Kind of Nylon in Adhesive | Peel Strength (N) |
|---|---|---|---|---|
| Example 4 | nylon 12 | nylon 12 | nylon 6/-nylon 12 =25/75 | 47.9 |
| Example 5 | nylon 6/-nylon 12 =40/60 | nylon 12 | nylon 6/-nylon 12 =25/75 | 168.2 |
| Comparative Ex. 4 | nylon 12 | nylon 12 | nylon 11 | 30.1 |
| Reference Ex. 1 | nylon 6/-nylon 12 =40/60 | nylon 12 | nylon 11 | 130.4 |

### EXAMPLES 6 TO 15 AND COMPARATIVE EXAMPLE 5

Compositions containing a copolymerized nylon or a copolymerized nylon blend, a nucleating agent and a lubricant and having the formulations shown in Table 3 were produced using a kneader. Composition ratio of the copolymerized nylons used was nylon 6/nylon 12= 40/60.

Tensile test specimens (Type I) were prepared according to ASTM D638 using resin compositions shown in Table 3, which were referred to as materials A to be adhered. Then, 12.7 mm X 120 mm X 1.5 mmt test specimens were prepared using nylon 12, which were referred to as materials B to be adhered. Each of the materials A to be adhered was adhered to each of the materials B to be adhered using a solvent adhesive for nylon NYLINK (10% by weight solution of nylon 11 in carvacrol/thymol = 2/1) made by Industrial Pipe System. Adhered length was adjusted to be 50 mm and, after leaving for 6 days, peeling test was conducted. The distance between grips was 40 mm, and rate of pulling was 200 mm/min. Cooling time upon injection molding was the shortest period for molding the ASTM specimens (Type I).

Results of the evaluation are shown in Table 3.

**Table 3**

| | Material A to be adhered | | | | Material B | Feel strength (N) | Cool-Time (sec) |
|---|---|---|---|---|---|---|---|
| | Nylon 12 | erized Nylon | Nucleating Agent | Lubri- cant (wt%) | | | |
| Example 6 | 0 | 100 | talc 1 | - | nylon 12 | 125.3 | 150 |
| Example 7 | 0 | 100 | talc 2 | - | nylon 12 | 120.2 | 90 |
| Example 8 | 10 | 90 | talc 2 | - | nylon 12 | 107.0 | 70 |
| Example 9 | 30 | 70 | talc 2 | - | nylon 12 | 81.5 | 40 |
| Example 10 | 40 | 60 | talc 2 | - | nylon 12 | 80.9 | 40 |
| Example 11 | 50 | 50 | talc 2 | | nylon 12 | 75.2 | 40 |
| Example 12 | 30 | 70 | - | A 0.5 | nylon 12 | 84.3 | 40 |
| Example 13 | 30 | 70 | - | B 0.5 | nylon 12 | 80.7 | 40 |
| Example 14 | 30 | 70 | talc 1 | A 0.5 | nylon 12 | 76.3 | 40 |
| Example 15 | 40 | 60 | talc 1 | A 0.5 | nylon 12 | 68.9 | 40 |
| Comp. Ex. 5 | 100 | 0 | - | - | nylon 12 | 30.1 | 20 |
| Ref. Ex. 2 | 0 | 100 | - | - | nylon 12 | 130.4 | 180 |
| Lubricant A: montan wax Lubricant B: potassium behenate | | | | | | | |

### EXAMPLES 16 TO 18

Compositions containing a copolymerized nylon blend, a nucleating agent and a lubricant and having the formulations shown in Table 4 were produced using a kneader. Composition ratio of the copolymerized nylons used was nylon 6/nylon 12= 40/60.

Tensile test specimens (Type I) were prepared according to ASTM D638 using resin compositions shown in Table 4, which were referred to as materials A to be adhered. Then, 12.7 mm X 120 mm X 1.5 mmt test specimens were prepared using nylon 12, which were referred to as materials B to be adhered. Each of the materials A to be adhered was adhered to each of the materials B to be adhered using a solvent adhesive prepared by dissolving a copolymerized nylon (nylon 6/nylon 12= 25/75) in a solvent (carvacrol/thymol = 2/1) at a concentration of 1% by weight. Adhered length was adjusted to be 50 mm and, after leaving for 6 days, peeling test was conducted. The distance between grips was 40 mm, and rate of pulling was 200 mm/min. Cooling time upon injection molding was the shortest period for molding the ASTM specimens (Type I).

Results of the evaluation are shown in Table 4.

**Table 4**

| | Material A to be adhered | | | | Material B | Feel Strength strength (N) | Cooling Time (sec) |
|---|---|---|---|---|---|---|---|
| | Nylon 12 | Copolymerized Nylon | Nucleating Agent (wt%) | Lubricant (wt%) | | | |
| Example 16 | 30 | 70 | talc 2 | - | nylon 12 | 97.8 | 40 |
| Example 17 | 30 | 70 | - | A 0.5 | nylon 12 | 108.7 | 40 |
| Example 18 | 30 | 70 | talc 1 | A 0.5 | nylon 12 | 90.9 | 40 |
| Lubricant A: montan wax | | | | | | | |

An effective adhesive layer can be formed in adhesion of nylon resin moldings using a solvent adhesive by using a joint of the invention comprising a copolymerized nylon. The present invention can be applied to uses where a strong peel strength is required.

In addition, cooling time upon injection molding can be shortened by using a joint made of a composition comprising the copolymerized nylon or a copolymerized nylon blend and at least one of a nucleating agent and a lubricant in comparison with the case of using only the copolymerized nylon.

While the invention has been described in detail and with reference to specific embodiments thereof, it will be apparent to one skilled in the art that various changes and modifications can be made therein without departing from the spirit and scope thereof.

## Claims

1. A solvent adhesive for nylon resin moldings, which comprises a solvent and a copolymerized nylon.

2. The solvent adhesive for nylon resin moldings as claimed in claim 1, which comprises 0.5 to 20% by weight, based on the total weight of the solvent adhesive, of a copolymerized nylon comprising two or more kinds of units derived from lactams containing 6 to 12 carbon atoms, aminocarboxylic acids containing 6 to 12 carbon atoms, and a combination of a dicarboxylic acid containing 3 to 22 carbon atoms, and diamine containing 2 to 20 carbon atoms.

3. The solvent adhesive for nylon resin moldings as claimed in claim 2, wherein the copolymerized nylon comprises 5 to 95% by weight of nylon 12 component, based on the total weight of the copolymerized nylon.

4. The solvent adhesive for nylon resin moldings as claimed in one of claims 1 to 3, wherein the solvent comprises at least one of phenolic compounds and fluoroalcoholic compounds.
